# EUROPÄISCHE PATENTANMELDUNG

(11) **EP 2 081 140 A1**
(43) Veröffentlichungstag der Anmeldung: **22.07.2009**
(21) Anmeldenummer: 09000311.2
(22) Anmeldetag: 12.01.2009
(51) Int. Cl.: G06Q 20/00, G07B 15/02

(54) **Verfahren und System zum Schutz einer Transaktion**

(30) Priorität: 15.01.2008 DE 102008004383
(71) Anmelder: Giesecke & Devrient GmbH, 81677 München (DE)
(72) Erfinder: Spitz, Stephan, Dr., 81247 München (DE); Finkenzeller, Klaus, 85774 Unterföring (DE)

(57) **Zusammenfassung**

Die Erfindung betrifft Verfahren zum Schutz einer Transaktion, welche eine Positionsinformation verwendet. Zwischen einem Endgerät (1; Mob1, Mob2) und einem ortsfesten Positionsgeber (2) werden Transaktionsdaten (TD) ausgetauscht, welche die Positionsinformation enthalten oder zur Bestimmung der Positionsinformation vorgesehen sind. Zur Absicherung der Transaktion wird zumindest eine Kontrollposition für das Endgerät (1; Mob1, Mob2) ermittelt und für eine Plausibilitätsprüfung der Positionsinformation verwendet wird.

## Beschreibung

Die Erfindung betrifft ein Verfahren zum Schutz einer Transaktion, welche eine Positionsinformation verwendet, wobei zur Bestimmung der Positionsinformation zwischen einem Endgerät und einem, insbesondere ortsfesten, Positionsgeber Transaktionsdaten ausgetauscht werden. Die Erfindung betrifft ferner ein System zum Schutz einer solchen Transaktion.

NFC (Near Field Communication) bezeichnet eine Nahfeldkommunikation und ist ein Übertragungsstandard zum kontaktlosen Austausch von Daten über kurze Strecken. In dem e-Ticketing-System für öffentliche Verkehrsmittel "Touch & Travel" werden NFC- oder RFID-fähige Endgeräte eingesetzt. Start- und Endpunkt einer Fahrt werden beispielsweise mit Hilfe von stationären, an den Bahnhöfen oder Haltestellen angebrachten RFID-Tags bestimmt. Mit dem NFC-fähigen Endgerät wird eine Nahfeldkommunikation zu einem stationären RFID-Tag an einem Startpunkt der Fahrt aufgebaut. Dieser Vorgang wird als "CheckIn" bezeichnet. In entsprechender Weise wird beim Fahrtende von dem Nutzer des NFC-Endgeräts eine Kommunikation zu einem am Endziel angeordneten stationären RFID-Tag aufgebaut, wobei die Kommunikation erfasst und damit das Fahrtende gebucht wird. Dieser Vorgang wird auch als "CheckOut" bezeichnet.

Ein denkbarer Angriff auf eine solche kontaktlose Transaktion ist beispielsweise die Verwendung einer falschen Standortinformation für den CheckOut-Vorgang. Die Standortinformation eines RFID-Tags von einem ersten Bahnhof wird an einem zweiten Bahnhof verwendet, um nur den Fahrpreis bis zu dem ersten Bahnhof bezahlen zu müssen.

Es ist die Aufgabe der vorliegenden Erfindung, eine Vorrichtung und ein System zum Schutz einer positionsbezogenen Transaktion anzugeben, welche einen verbesserten Schutz der Transaktion bereitstellen. Es ist ferner Aufgabe der Erfindung, ein Computerprogrammprodukt sowie ein Endgerät anzugeben.

Diese Aufgaben werden durch die Gegenständer unabhängigen Ansprüche gelöst. Vorteilhafte Ausgestaltungen ergeben sich jeweils aus den abhängigen Patentansprüchen.

Bei einem erfindungsgemäßen Verfahren zum Schutz einer Transaktion werden während der Transaktion Transaktionsdaten zwischen dem Endgerät und dem Positionsgeber ausgetauscht. Die Transaktionsdaten enthalten eine Positionsinformation oder sind zur Bestimmung der Positionsinformation vorgesehen. Zur Absicherung der Transaktion ist vorgesehen, zumindest eine Kontrollposition für das Endgerät zu ermitteln, welche zur Plausibilitätsprüfung der Positionsinformation verwendet wird.

Die Erfindung beruht auf dem Gedanken, dass durch die zusätzliche Bestimmung des Standorts einer Transaktion ein Weiterleitungs-Angriff erkannt und damit verhindert werden kann. Hierzu wird zusätzlich zu den aus den Transaktionsdaten gewonnenen Informationen zumindest eine Kontrollposition, d.h. eine Ortsposition, für das Endgerät ermittelt. Die Erhöhung der Sicherheit der Transaktion beruht darauf, dass für die Transaktion parallel der Standort über eine zuverlässige Informationsquelle, z.B. eine GSM (Global System for Mobile Communication)- bzw. UMTS (Universal Mobile Telecommunication System)-Funkzelle, ein GPS (Global Positioning System)-Signal, usw. ermittelt wird. Durch die Verarbeitung der Transaktionsdaten und der zumindest einen Kontrollposition kann ermittelt werden, ob sich das Endgerät tatsächlich an der angeblichen Position befindet.

Der Positionsgeber ist vorzugsweise ein ortsfestes RFID- oder NFC-Tag. Die Ermittlung der zumindest einen Kontrollposition erfolgt durch den kontaktbehafteten oder kontaktlosen Austausch von Ortsdaten zwischen dem Endgerät und einer von dem Positionsgeber unabhängigen Instanz. Anhand der Ortsdaten, welche nicht von dem Positionsgeber bereitgestellt werden, kann dann die zur Plausibilitätsprüfung herangezogene Kontrollposition ermittelt werden.

Im Folgenden werden weitere vorteilhafte Ausgestaltungen am Beispiel einer SIM-Karte als ein Sicherheitsmodul des Endgerätes beschrieben. Andere Sicherheitsmodule können tragbare Datenträger sein, wie beispielsweise eine sichere Massenspeicherkarte, die reversibel in das Endgerät einsetzbar sind oder ein fest im Endgerät eingebautes Sicherheitsmodul, wie beispielsweise ein TPM-Modul.

Die zumindest eine Kontrollposition wird gemäß einer Ausführungsvariante mit Hilfe einer SIM (Subscriber Identity Module)-Karte des Endgeräts bestimmt. In einer ersten Variante wird die zumindest eine Kontrollposition mit Hilfe eines in der SIM-Karte des Endgeräts vorgesehenen GPS (Global Positioning System)-Systems bestimmt. Eine dementsprechende Lösungsvariante ist beispielsweise in der EP 1 843 611 A2 offenbart. In einer alternativen Variante wird die zumindest eine Kontrollposition mit Hilfe eines SIM-Toolkit-Kommandos "provide local Information" bestimmt.

Die SIM-Karte des Endgerätes kann angepasst sein, um die Plausibilitätsprüfung durchzuführen. Ferner kann die SIM-Karte als Sicherheitsmodul angepasst sein, um die Kontrollposition abzusichern. Beispielsweise kann sie die Quelle der Kontrollposition authentisieren oder einen Zeitpunkt für die Bestimmung der Kontrollposition verifizieren.

Eine weitere Erhöhung der Sicherheit bei der Durchführung einer Transaktion ergibt sich dann, wenn die zumindest eine Kontrollposition zur Plausibilitätsprüfung an einen zentralen Rechner übertragen wird und damit unabhängig von dem Endgerät ermittelt wird.

Es ist ferner vorgesehen, dass bei der NFC-Transaktion mittels des Positionsgebers eine Ortsinformation ermittelt wird, welche an den zentralen Rechner zur Auswertung übertragen wird. Hierdurch kann ein Abgleich der mittels des Positionsgebers ermittelten Ortsinformation mit der über die von dem Positionsgeber unabhängigen Instanz ermittelten Ortsinformation, welche die zumindest eine Kontrollposition repräsentiert, erfolgen.

Gemäß einer weiteren Ausgestaltung der Erfindung erfolgt eine sequentielle Ermittlung der zumindest einen Kontrollposition über einen vorgegebenen Zeitraum vor und/oder nach der NFC-Transaktion. Diese Vorgehensweise entspricht der Ermittlung eines Bewegungsprofils des NFC-Endgeräts und sorgt für zusätzliche Sicherheit.

Dabei kann im Weiteren vorgesehen sein, ein erstes Bewegungsprofil des Endgeräts zu ermitteln, das notwendig ist, um an den Ort der Transaktion zu gelangen. Ferner wird ein zweites Bewegungsprofil des Endgeräts ermittelt, das der tatsächlichen Bewegung des Endgeräts entspricht. Schließlich wird ein Abgleich des ersten und des zweiten Bewegungsprofils vorgenommen. Unter einem Bewegungsprofil wird hierbei eine Vielzahl an zeitlich aufeinander folgenden Ortsinformationen verstanden. Der Abgleich des ersten und des zweiten Bewegungsprofils dient dazu, z.B. eine Übereinstimmung der mittels des Positionsgebers ermittelten Ortsinformation und der ermittelten zumindest einen Kontrollposition festzustellen. Hiermit kann festgestellt werden, ob der Ort der Transaktion einer Endposition des zweiten Bewegungsprofils entspricht.

In einer weiteren Ausgestaltung erfolgt der Abgleich von ermittelten Bewegungsprofilen mit in dem zentralen Rechner gespeicherten Informationen kryptographisch abgesichert. Insbesondere kann dabei der Austausch von Informationen zwischen dem Endgerät und dem zentralen Rechner mittels Hashwerten erfolgen. Neben einer erhöhten Sicherheit der Transaktion lässt sich hierdurch das Datenvolumen für den Datentransfer optimieren.

Zur weiteren Erhöhung der Sicherheit der Transaktion erfolgt die Ermittlung der zumindest einen Kontrollposition und/ oder der Abgleich der zumindest einen Kontrollposition und der Ortsinformation in einer sicheren Prozessumgebung. Insbesondere kann eine Authentisierung der Instanz erfolgen, aus deren Daten die zumindest eine Kontrollposition ermittelt wird. Dies kann z.B. eine Applikation zum Sammeln von UMTS-Zellinformationen aus einer USIM-Karte sein. Dabei authentisiert sich eine Funkzelle beim Endgerät beispielsweise über ein AKA-Verfahren. Eine sichere Prozessumgebung kann beispielsweise durch die Realisierung der Endgeräts als MTM (Mobile Trust Module der TCG)-gesichertes Mobiltelefon gewährleistet werden.

Die Transaktion gilt dann als erfolgreich, wenn die Auswertung der Ortsinformation und der zumindest einen Kontrollinformation ergibt, dass ein vorgegebenes Kriterium erfüllt ist. Dieses vorgegebene Kriterium kann beispielsweise das Übereinstimmen von Ortsinformation und zumindest einer Kontrollinformation sein.

Ein erfindungsgemäßes System zum Schutz einer entsprechenden Transaktion umfasst ein erstes Mittel zur Ermittlung zumindest einer Kontrollposition für das Endgerät. Es umfasst weiter ein zweites Mittel zur Durchführung einer Plausibilitätsprüfung unter Verwendung der zumindest einen Kontrollposition. Darüber hinaus kann das erfindungsgemäße System weitere Mittel zur Durchführung des erfindungsgemäßen Verfahrens umfassen. Hiermit sind die gleichen Vorteile verbunden, wie sie vorstehend bei der Beschreibung des erfindungsgemäßen Verfahrens erläutert wurden. Die Erfindung umfasst ferner ein Endgerät, insbesondere ein Mobilfunktelefon, welches Mittel zur Durchführung des erfindungsgemäßen Verfahrens umfasst.

Ein erfindungsgemäßes Computerprogrammprodukt weist maschinenlesbare Programmbefehle für eine Steuerungseinheit eines erfindungsgemäßen Systems auf, die diese zur Ausführung des erfindungsgemäßen Verfahrens veranlassen. Das erfindungsgemäße Computerprogrammprodukt kann ein körperliches Medium mit gespeicherten Programmbefehlen sein, beispielsweise ein Halbleiterspeicher, eine Diskette oder eine CD-ROM. Das Computerprogrammprodukt kann auch ein nicht-körperliches Medium sein, beispielsweise ein über ein Computernetzwerk übermitteltes Signal.

Bei einem erfindungsgemäßen Verfahren kann der Austausch von Informationen zwischen dem Endgerät (1; Mob1, Mob2) und dem zentralen Rechner (4) mittels Hashwerten erfolgen.

Bei einem erfindungsgemäßen Verfahren kann die Ermittlung der zumindest einen Kontrollposition und/ oder der Abgleich der zumindest einen Kontrollposition und der Positionsinformation in einer sicheren Prozessumgebung erfolgen.

Bei einem erfindungsgemäßen Verfahren kann eine Authentisierung der Instanz (3) erfolgen, aus deren Daten die zumindest eine Kontrollposition ermittelt wird.

Bei einem erfindungsgemäßen Verfahren gilt die Transaktion als erfolgreich, wenn die Auswertung der Positionsinformation und der zumindest einen Kontrollinformation ergibt, dass ein vorgegebenes Kriterium erfüllt ist.

Die Erfindung wird nachfolgend weiter anhand eines Ausführungsbeispiels in den Figuren beschrieben. Es zeigen:
- Fig.1: eine schematische Darstellung der in einem erfindungsgemäßen System zum Schutz einer NFC-Transaktion beteiligten Komponenten,
- Fig. 2: ein der Erfindung zu Grunde liegendes Angriffsszenario mittels einer Relay-Attacke beim Abschluss einer NFC-Transaktion, und
- Fig. 3: eine Prinzipdarstellung der zur Plausibilitätsprüfung der NFC-Transaktion verwendeten Ortsinformationen.

Im Folgenden wird die Erfindung am Beispiel eines NFC-fähigen Endgerätes und eines ortsfesten NFC-Tags als Positionsgeber beschrieben. Alternative Ausgestaltungen sind jedoch denkbar, so kann als Positionsgeber beispielsweise auch ein NFC-fähiges Endgerät dienen.

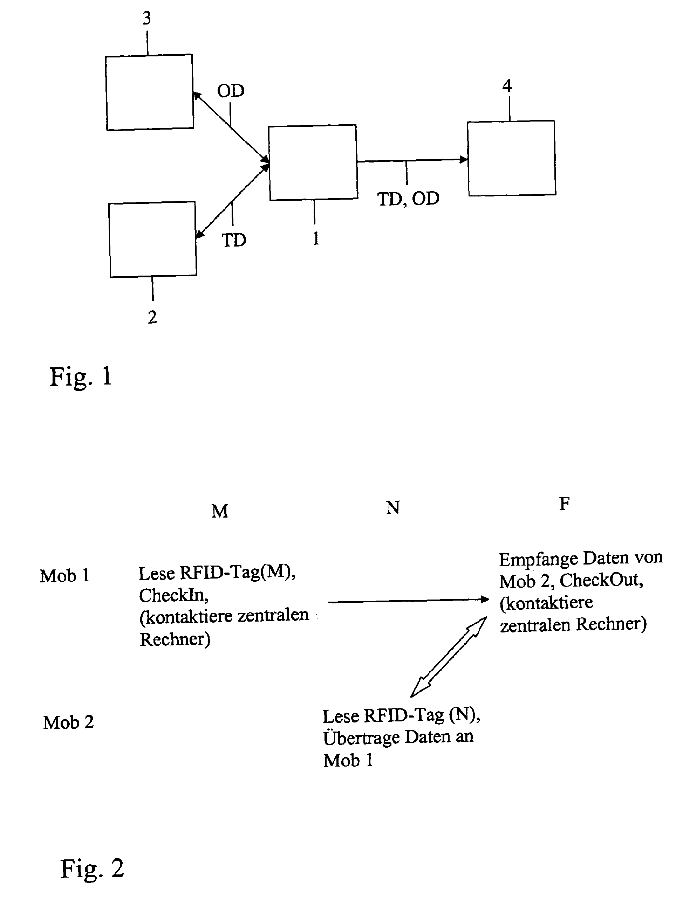

Ein erfindungsgemäßes System zum Schutz einer NFC-Transaktion zwischen einem NFC-Endgerät 1 und einem ortsfesten NFC-Tag eines Lesegerätes 2 ist schematisch in Fig.1 dargestellt. Bei dem NFC-Endgerät 1 kann es sich beispielsweise um ein Mobilfunktelefon handeln, welches über Mittel zur Nahfeldkommunikation verfügt. Das NFC-Tag 2 kann in einem beliebig ausgestalteten Lese-/Schreibgerät angeordnet sein. Bei genügender Annäherung des NFC-Endgerätes 1 an das ortsfeste RFID-Tag 2 werden zur Durchführung der NFC-Transaktion Transaktionsdaten TD zwischen dem NFC-Endgerät 1 und dem NFC-Tag 2 ausgetauscht.

Zum Schutz der NFC-Transaktion vor z.B. einer Relay-Attacke sind in dem erfindungsgemäßen System ferner eine Instanz 3 sowie ein zentraler Rechner 4 vorgesehen. Der Datenaustausch zwischen dem NFC-Endgerät 1 und der Instanz 3 kann wahlweise kontaktlos oder kontaktbehaftet erfolgen. Bei einer kontaktlosen Datenübertragung kann eine prinzipiell beliebige Datenübertragungstechnologie zum Einsatz kommen. Zwischen dem NFC-Endgerät 1 und der Instanz 3 werden Ortsdaten OD ausgetauscht. Aus diesen lässt sich für das NFC-Endgerät 1 eine Ortsbestimmung durchführen, welche als Kontrollposition für das NFC-Endgerät 1 ermittelt wird. Die Bestimmung der Kontrollposition kann entweder in dem NFC-Endgerät 1 oder in der Instanz 3 oder in dem zentralen Rechner 4 durchgeführt werden. In dem zentralen Rechner 4, welcher von dem NFC-Endgerät 1 die Transaktionsdaten TD und die Ortsdaten OD erhält, wird dann eine Plausibilitätsprüfung der NFC-Transaktion vorgenommen.

Durch die Bestimmung des Standorts einer NFC-Transaktion, d.h. des Standorts des NFC-Endgeräts 1, kann eine Relay-Attacke erkannt und gegebenenfalls verhindert werden. Erfindungsgemäß werden dazu neben den Transaktionsdaten TD zwischen dem NFC-Endgerät 1 und dem NFC-Tag 2 parallel die Ortsdaten OD zwischen dem NFC-Endgerät 1 und der von dem NFC-Tag unabhängigen Instanz 3 ausgetauscht. Der zentrale Rechner 4, welcher die Transaktionsdaten und die Ortsdaten OD von dem NFC-Endgerät 1 enthält, ist dann in der Lage, den Ort der NFC-Transaktion zu bestimmen, wodurch eine gemäß Fig. 2 beschriebene Relay-Attacke erkennbar ist.

In Fig. 2 sind hierbei die an verschiedenen Orten M, N und F ablaufenden Aktionen eines ersten NFC-Endgeräts Mob 1 und eines zweiten NFC-Endgeräts Mob 2 dargestellt. Das Szenario ist beispielsweise auf das sog. eticketing in einem Verkehrsbeförderungssystem anwendbar. Der Nutzer des ersten NFC-Endgeräts Mob 1 liest Daten an einem NFC-Tag an dem Ort M (nachfolgend NFC-Tag(<Ort>), hier: NFC-Tag(M)) ein, wodurch ein sog. CheckIn-Vorgang vorgenommen ist. Hierbei ausgetauschte Daten werden an einen zentralen Rechner durch das NFC-Endgerät Mob 1 übertragen. Der Nutzer des NFC-Endgeräts Mob 1 möchte die am Ort M initiierte Transaktion nun nach seiner Beförderung an dem Ort F beenden. Hierzu muss ein sog. CheckOut-Vorgang durchgeführt werden, damit ein korrekter Preis für den Transport von M nach F ermittelt und dem Nutzer des NFC-Endgeräts Mob 1 berechnet werden kann. Bei der Durchführung einer Relay-Attacke wird jedoch versucht, einen anderen Ort, hier: N, vorzutäuschen, welcher im Ergebnis z.B. zu einem verringerten Fahrpreis führt. Hierbei werden durch einen anderen Nutzer mit einem zweiten NFC-Endgerät Mob 2 Transaktionsdaten von einem NFC-Tag(N) am Ort N ausgelesen und die Daten an das erste NFC-Endgerät Mob 1 übertragen. Das erste NFC-Endgerät Mob 1 empfängt am Ort F die Daten des zweiten NFC-Endgeräts von Mob 2 und nimmt mit diesen den CheckOut-Vorgang vor. Hierbei werden wiederum die Daten an den zentralen Rechner übertragen, damit eine entsprechende Vergebührung vorgenommen werden kann, wobei diese bei der Relay-Attacke jedoch für den Weg zwischen M und N anstatt tatsächlich zwischen M und F berechnet wird.

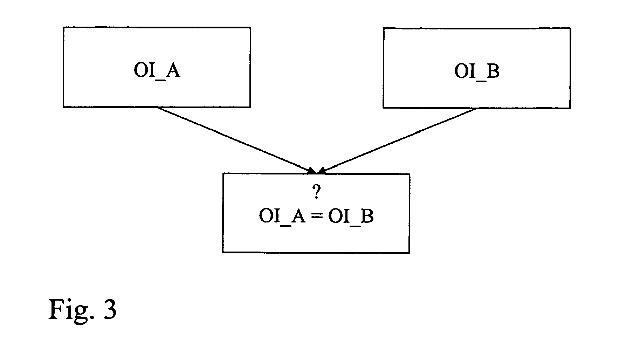

Um dies zu verhindern erfolgt bei der Erfindung die Verknüpfung der bei einem Checkln bzw. CheckOut gesammelten Daten mit Informationen, welche eindeutig den Ort der vorgenommenen NFC-Transaktion belegen. Hierzu werden, wie dies in Fig. 3 verdeutlicht dargestellt ist, Ortsinformationen OI_A, welche im Rahmen der Nahfeldkommunikation aus dem NFC-Tag bzw. den Transaktionsdaten TD extrahiert werden, mit Ortsinformationen OI_B (d.h. den Ortsdaten OD) der weiteren Instanz, z.B. einer GSM- oder UMTS-Zelle, abgeglichen: dies bedeutet es wird überprüft, ob die Ortsinformationen OI_A den Ortsinformationen OI_B entsprechen.

Eine Erhöhung der Sicherheit ergibt sich durch eine sequentielle Ermittlung von Standortinformationen über einen längeren Zeitraum vor und/oder nach der vorgenommenen NFC-Transaktion. Hierbei wird ein Bewegungsprofil des NFC-Endgeräts 1 erstellt. Hierbei können Bewegungsprofile, welche notwendig sind, um an den Ort der NFC-Transaktion zu gelangen, mit dem tatsächlich ermittelten Bewegungsprofil des NFC-Endgeräts 1 abgeglichen werden. In dem im Zusammenhang mit Fig. 2 beschriebenen Ausführungsbeispiel bedeutet dies, dass Ortsinformationen für den Weg von M nach F vorliegen. Als Ort für den CheckOut-Vorgang wurde jedoch N ermittelt. Hieraus kann geschlossen werden, dass der Ort des CheckOut-Vorganges möglicherweise mit einer Relay-Attacke vorgetäuscht wurde.

Ferner kann vorgesehen sein, einen Abgleich der Ortsinformationen über Hashwerte vorzunehmen. Insbesondere kann der Abgleich von ermittelten Bewegungsprofilen mit in dem zentralen Rechner 4 gespeicherten Informationen kryptographisch abgesichert erfolgen. Es bietet sich an, Informationen für den Austausch über Hashwerte durchzuführen, da hierdurch das Datenvolumen zwischen dem zentralen Rechner 4 und dem NFC-Endgerät 1 optimiert werden kann. Im Zusammenhang mit dem Ausführungsbeispiel in Fig. 2 bedeutet dies, dass zu einer Fahrt von M nach N ein vorgegebener Hashwert übermittelt wird. In dem zentralen Rechner 4 wird versucht, über die vorliegenden Fahrinformationen, z.B. Zelllisten, denselben Hashwert zu erreichen. Stellt sich heraus, dass der übermittelte Hashwert zu keinem möglichen Hashwert für eine Fahrt von M nach N passt, liegt vermutlich eine Relay-Attacke vor.

Zu einer weiteren Erhöhung der Sicherheit trägt eine sichere Prozessumgebung zur Ermittlung der Ortsinformationen und eine Authentisierung der Instanz 3 bei. Dies kann z.B. eine Applikation zum Sammeln von UMTS-Zellinformationen auf einer USIM-Karte des NFC-Endgeräts 1 sein. Hierbei authentisiert sich die Funkzelle bei dem NFC-Endgerät 1 über das bekannte AKA-Verfahren. Eine sichere Prozessumgebung kann z.B. ein MTM (Mobile Trust Module der TCG)-gesichertes Mobiltelefon sein.

Der Datenabgleich in einer sicheren Prozessumgebung ist wichtig, um eine Manipulation durch den Benutzer des NFC-Endgeräts zu verhindern. Auf einer Chipkarte, z.B. einer SIM-Karte, des NFC-Endgeräts oder in dem zentralen Rechner können Manipulationsversuche über eine Relay-Attacke sicher erkannt und entsprechende Maßnahmen getroffen werden.

Eine Realisierungsvariante auf einer SIM-Karte besteht z.B. aus zwei Java-Card-Applikationen. Eine erste Applikation liest hierbei die Daten des NFC-Tags aus und ist für die Ausgabe eines elektronischen Tickets auf der SIM-Karte verantwortlich. Die Ortsinformationen werden entsprechend dem vorher beschriebenen Verfahren von einer zweiten Applikation abgefragt, welche parallel auf der SIM-Karte aktiv ist. Nach einem erfolgreichen Abgleich beider Daten wird dann ein gültiger Ticket-Datensatz von der ersten Applikation auf der SIM-Karte erzeugt.

## Patentansprüche

1. Verfahren zum Schutz einer Transaktion, welche eine Positionsinformation verwendet, wobei zwischen einem Endgerät (1; Mob1, Mob2) und einem ortsfesten Positionsgeber (2) Transaktionsdaten (TD) ausgetauscht werden, welche die Positionsinformation enthalten oder zur Bestimmung der Positionsinformation vorgesehen sind; **dadurch gekennzeichnet, dass** zur Absicherung der Transaktion zumindest eine Kontrollposition für das Endgerät (1; Mob1, Mob2) ermittelt wird, welche für eine Plausibilitätsprüfung der Positionsinformation verwendet wird.

2. Verfahren nach Anspruch 1, bei dem die Ermittlung der Kontrollposition durch den Austausch von Ortsdaten (OD) zwischen dem Endgerät (1; Mob1, Mob2) und einer von dem Positionsgeber (2) unabhängigen Instanz (3) erfolgt.

3. Verfahren nach einem der vorherigen Ansprüche, bei dem die zumindest eine Kontrollposition mit Hilfe eines Sicherheitsmodul des Endgeräts (1; Mob1, Mob2) bestimmt wird.

4. Verfahren nach einem der vorherigen Ansprüche, bei dem die zumindest eine Kontrollposition mit Hilfe eines in dem Endgerät (1; Mob1, Mob2) vorgesehenen GPS-Systems bestimmt wird.

5. Verfahren nach Anspruch 3, bei dem die zumindest eine Kontrollposition mit Hilfe eines SIM-Toolkit-Kommandos "provide local information" bestimmt wird.

6. Verfahren nach einem der vorherigen Ansprüche, bei dem die Plausibilitätsprüfung in einem Sicherheitsmodul des Endgerätes erfolgt.

7. Verfahren nach einem der vorherigen Ansprüche, bei dem die zumindest eine Kontrollposition zur Plausibilitätsprüfung an einen zentralen Rechner (4) übertragen wird.

8. Verfahren nach einem der vorherigen Ansprüche, bei dem die Positionsinformation des Positionsgebers (2) an den zentralen Rechner (4) zur Auswertung übertragen wird.

9. Verfahren nach einem der vorherigen Ansprüche, bei dem eine sequentielle Ermittlung der zumindest einen Kontrollposition über einen vorgegebenen Zeitraum vor und/oder nach dem Datenaustausch mit dem Positionsgeber erfolgt.

10. Verfahren nach Anspruch 9, bei dem
- ein erstes Bewegungsprofil des Endgeräts (1; Mob1, Mob2) ermittelt wird, das notwendig ist, um an den Ort der Transaktion zu gelangen,
- ein zweites Bewegungsprofil des Endgeräts (1; Mob1, Mob2) ermittelt wird, das der tatsächlichen Bewegung des Endgeräts (1; Mob1, Mob2) entspricht, und
- ein Abgleich des ersten und des zweiten Bewegungsprofils vorgenommen wird.

11. Verfahren nach Anspruch 10, bei dem der Abgleich von ermittelten Bewegungsprofilen mit in dem zentralen Rechner (4) gespeicherten Informationen kryptographisch abgesichert erfolgt.

12. System zum Schutz einer Transaktion, welche eine Positionsinformation verwendet, wobei zwischen einem Endgerät (1; Mob1, Mob2) und einem ortsfesten Positionsgeber (2) Transaktionsdaten (TD) ausgetauscht werden, welche die Positionsinformation enthalten oder zur Bestimmung der Positionsinformation vorgesehen sind, das System umfassend:
- einem ersten Mittel zur Ermittlung zumindest einer Kontrollposition für das Endgerät (1; Mob1, Mob2),
- einem zweiten Mittel zur Durchführung einer Plausibilitätsprüfung für die Positionsinformation unter Verwendung der Kontrollposition.

13. System nach Anspruch 16, das weitere Mittel zur Durchführung des Verfahrens gemäß einem der Ansprüche 2 bis 11 umfasst.

14. Endgerät (1; Mob1, Mob2), umfassend Mittel zur Durchführung des Verfahrens nach einem der Ansprüche 1 bis 11.

15. Computerprogrammprodukt, das maschinenlesbare Programmbefehle für eine Steuerungseinheit eines Systems gemäß einem der Ansprüche 12 oder 13 aufweist, die diese zur Ausführung eines Verfahrens nach einem der Ansprüche 1 bis 11 veranlassen.
